# EUROPEAN PATENT APPLICATION

(11) **EP 4 821 413 A1**
(43) Date of publication of application: **14.10.2026**
(21) Application number: 26171217.8
(22) Date of filing: 08.04.2026
(51) Int. Cl.: A47J 31/52, A47J 31/40

(54) **BEVERAGE MACHINE AND BEVERAGE PREPARATION METHOD**

(30) Priority: 09.04.2025 CN 202510442931; 09.04.2025 CN 202520671695 U
(71) Applicant: Gyde, Ramsey James, Hong Kong (HK)
(72) Inventor: Gyde, Ramsey James, Hong Kong (HK)
(74) Representative: Murgitroyd & Company

(57) **Abstract**

A beverage machine includes a main body (100) and a cup body (200). The main body (100) is provided with a beverage preparation assembly (130), a placement platform (140), a control system (150), a display screen (160), a first weighing system (170) and a second weighing system (180). The cup body (200) is placed on the placement platform (140) and located below the beverage preparation assembly (130). The first weighing system (170) is configured to measure an input weight of water and powder in the beverage preparation assembly (130). The second weighing system (180) is configured to measure an output weight of the beverage in the cup body (200). The control system (150) is configured to adjust brewing parameters of the beverage preparation assembly (130) in real time according to input set values of brewing parameters and current readings of the input weight and the output weight, and display the current readings of the input weight and the output weight.

## Description

### TECHNICAL FIELD

The present invention relates to the field of beverage machine technologies, and in particularly, to a beverage machine and a beverage preparation method.

### BACKGROUND

As people's living standards continues to improve, there is a growing demand for preparing beverages tailored to one's own taste, and especially for specialty beverages such as coffee and tea. Since each person has different taste preferences, a standardized customization formulas provided by a traditional beverage machine is no longer able to meet the personalized requirements of each person.

Taking coffee and tea as an example, at present, coffee and tea brewing systems used in beverage machines on the market are generally merely designed for one kind of coffee brewing method or one kind of tea brewing method (for example, a brewing method for espresso, drip, or capsules, or the like). These brewing systems mainly rely on preset time control, a flow meter, or a pressure sensor to manage the brewing process. However, such methods often lack real-time feedback and adaptive control, resulting in inconsistent extraction results. For instance, the traditional systems may stop brewing based solely on a timer or an estimated flow rate, ignoring dynamic factors such as a water retention capacity of the coffee puck. Moreover, such systems generally feature fixed user interfaces that offer limited flexibility for immediate adjustments or personalized operation.

### SUMMARY

An objective of the present invention is to overcome the deficiencies in the conventional technologies, and a beverage machine and beverage preparation method is provided to solve the above technical problems in the conventional technologies.

To achieve the above objective, the present invention is implemented by the following technical solutions:
In a first aspect, the present invention provides a beverage machine, and the beverage machine includes a main body and a cup body.

The main body is provided with a beverage preparation assembly, a placement platform, a control system, a display screen, a first weighing system, and a second weighing system.

The cup body is disposed on the placement platform and located below the beverage preparation assembly.

The first weighing system is configured to measure an input weight of water and powder in the beverage preparation assembly.

The second weighing system is configured to measure an output weight of a beverage in the cup body.

The control system is communicatively connected to the beverage preparation assembly, the display screen, the first weighing system, and the second weighing system separately, and is configured to adjust brewing parameters of the beverage preparation assembly in real time according to input set values of the brewing parameters and current readings of the input weight and the output weight, and display the current readings of the input weight, the output weight, and current readings of the brewing parameters in real time through the display screen.

In a preferred embodiment of the present application, the brewing parameters includes a powder dosage, a water injection volume, a brewing ratio, a brewing time, and a water temperature, pressure and flow rate of water flow passing through the powder; during a brewing process, the control system compares current readings of the pressure and the flow rate with the set values of the pressure and the flow rate in real time, and when the pressure or the flow rate deviates from the set values of the pressure or the flow rate, adjusts other brewing parameters in real time to achieve adjustment of the pressure or the flow rate, to ensure consistency for preparing the beverage under a current brewing mode.

In a preferred embodiment of the present application, during the brewing process, the control system compares a current reading of the input weight measured by the first weighing system in real time and a current reading of the output weight measured by the second weighing system in real time with set values respectively to determine whether beverage currently outputted into the cup body conforms to an expected brewing ratio, and adjusts the brewing parameters in real time when the beverage does not conforms to the expected brewing ratio.

In a preferred embodiment of the present application, during the brewing process, the control system monitors the water temperature in real time to maintain the water temperature within a range of a set value of the water temperature.

In a preferred embodiment of the present application, before brewing process starts, the control system calculates an injection volume of the water required to be input into the beverage preparation assembly according to the input set values of the brewing ratio and the powder dosage.

In a preferred embodiment of the present application, the display screen is an interactive touch display screen, and a user selects a brewing mode, presets and adjusts the brewing parameters in real time, and stores brewing recipes through the interactive touch display screen.

In a preferred embodiment of the present application, the beverage preparation assembly includes a water tank, a brewing chamber, and a brewing module, the water tank and the brewing chamber are disposed in the main body, and the brewing module is detachably connected to the brewing chamber.

In a preferred embodiment of the present application, the main body includes a body and a base, the body is detachably connected to the base, a portion of the beverage preparation assembly and the control system are disposed in the body, the placement platform is disposed on the base and located below the beverage preparation assembly, and the first weighing system is integrated at a bottom of the base.

In a preferred embodiment of the present application, the first weighing system is integrated in the beverage preparation assembly; and/or
the second weighing system is integrated at a bottom of the cup body or in the placement platform.

In a preferred embodiment of the present application, the cup body is fixed to the placement platform in a magnetic attraction manner.

In a second aspect, the present invention provides a beverage preparation method, implemented by the beverage machine according to the first aspect, the beverage preparation method including the following steps:
S100: inputting the set values of the brewing parameters.
S200: opening the first weighing system, and adding the powder and water into the beverage preparation assembly according to the set value of the brewing parameters.
S300: opening the second weighing system to start brewing the beverage.
S400: monitoring the current reading of the input weight from the first weighing system and the current reading of the output weight from the second weighing system in real time.
S500: adjusting the brewing parameters in real time according to the set values of the brewing parameters and the current readings of the input weight and the output weight.

In a preferred embodiment of the present application, the brewing parameters includes a powder dosage, a water injection volume, a brewing ratio, a brewing time, and a water temperature, pressure, and flow rate of water flow passing through the powder; and step S500 also includes: comparing current readings of the pressure and flow rate with set values of the pressure and the flow rate respectively in real time, and when the pressure or flow rate deviates from the set values of the pressure and the flow rate, adjusting other brewing parameters in real time to achieve adjustment of the pressure or the flow rate, to ensure consistency for preparing the beverage under a current brewing mode.

In a preferred embodiment of the present application, step S500 further includes, maintaining, by monitoring the water temperature in real time, the water temperature within a range of a set value of the water temperature. In a preferred embodiment of the present application, step S500 specifically includes: determining, by comparing current readings of the input weight and the output weight with their set values in real time, to calculate whether the beverage currently output into the cup body conforms to an expected brew ratio, and adjusting the brewing parameters in real time when the beverage does not conform to the expected brewing ratio.

In a preferred embodiment of the present application, the set values of the brewing parameters include set values of a brewing ratio and a powder dosage, the adding the powder and water into the beverage preparation assembly according to the set values of the brewing parameters of step S200 includes: calculating, according to the input set values of the brewing ratio and the powder dosage, an injection volume of the water the required to be input into the beverage preparation assembly.

According to the beverage machine and the beverage making method provided by the invention, two weighing systems are provided to monitor the input weight of the water and the output weight of the beverage at the same time to ensure that the brewing ratio is accurately controlled. Considering the water retention of the coffee puck, real-time accurate feedback is provided to maintain the consistency of the extraction quality. By directly measuring the input weight and the output weight, the flow rate and on/off timing of the water passing through the coffee puck is precisely controlled, so that accurate volumetric dispensing is realized, thereby ensuring stability, consistency and repeatability of each brewing process.

Moreover, a user can store and share personalized formulas while allowing fine-tuning for different coffee beans and brewing styles to achieve a highly personalized customized experience. Furthermore, the system can progressively optimize brewing parameters for more precise brewing experience. In addition, a multi-functional brewing platform is provided, which may replace multiple standalone apparatuses, thereby reducing costs and saving space, and thus ensuring high quality and consistency in different brewing modes.

### BRIEF DESCRIPTION OF THE DRAWINGS

The present invention is described below with reference to the accompanying drawings.
FIG. 1 is a three-dimensional view of a beverage machine according to a first embodiment of the present invention.
FIG. 2 is a schematic diagram of an internal structure of the beverage machine according to the first embodiment of the present invention.
FIG. 3 is a schematic diagram of an interface of a touch display screen of the beverage machine according to the first embodiment of the present invention.
FIG. 4 is a schematic diagram of an internal structure of a beverage machine according to a second embodiment of the present invention.
FIG. 5 is a schematic diagram of another internal structure of the beverage machine according to the second embodiment of the present invention.
FIG. 6 is a flowchart illustrating steps of a beverage preparation method according to an embodiment of the present invention.

Reference numerals:
100-main body; 101-support frame; 102-box body; 110-body; 120-base; 130-beverage preparation assembly; 131-water tank; 132-brewing chamber; 133-brewing module; 140-placement platform; 150-control system; 160-display screen; 170-first weighing system; 180-second weighing system; 200-cup body.

### DETAILED DESCRIPTION OF THE EMBODIMENTS

To better understand technical solutions of the present application, embodiments of the present application will be described below in detail with reference to the accompanying drawings.

It should be clear that, the described embodiments are merely a portion of the embodiments of the present application, rather than all the embodiments. Based on the embodiments of the present application, all other embodiments obtained by a person of ordinary skill in the art without creative efforts shall fall within the protection scope of the present application.

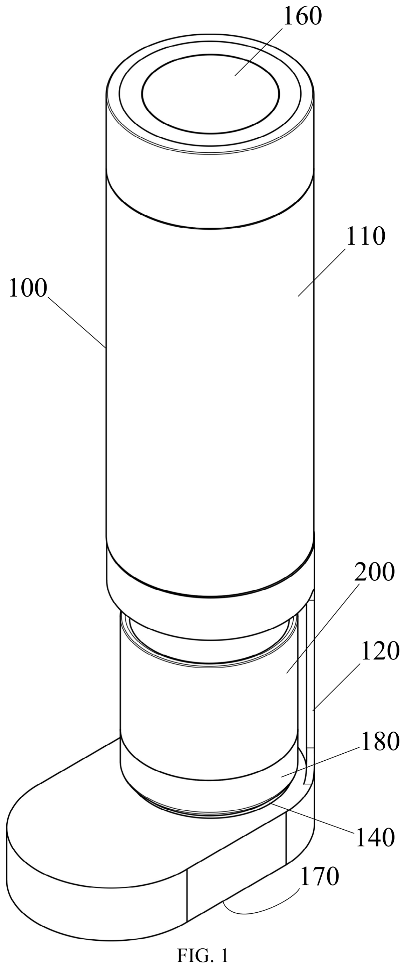

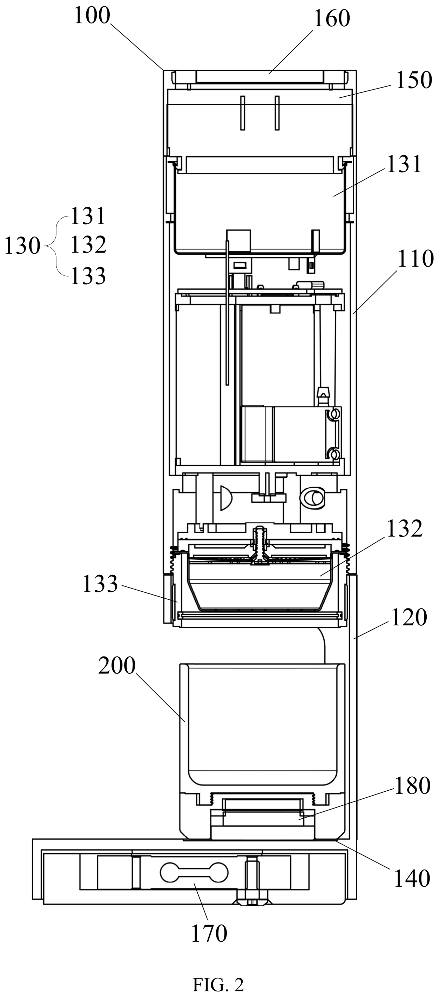

Referring to FIG. 1 to FIG. 3, an embodiment of the present invention provides a beverage machine including a main body 100 and a cup body 200. The main body 100 includes a body 110 and a base 120, and the body 110 is detachably connected to the base 120. A beverage preparation assembly 130, a placement platform 140, a control system 150, a display screen 160, a first weighing system 170 and a second weighing system 180 are provided in the main body 100.

A portion of the beverage preparation assembly 130 and the control system 150 are disposed in the body 110. The beverage preparation assembly 130 includes a water tank 131, a brewing chamber 132, and a brewing module 133. The water tank 131 and the brewing chamber 132 are disposed inside the main body 100, and the brewing module 133 is detachably connected to the brewing chamber 132. The water tank 131 has a structure with an openable lid, the brewing chamber 132 is a structure fully enclosed within the main body 100, and the brewing module 133 is a structure that extends into the brewing chamber 132 from the from the outside of the main body 100, and is fixed to the main body 100. The brewing module 133 may select brewing modes according to the taste and preference of the user, the brewing modes includes espresso, capsule coffee, drip coffee, and tea bags, and the like. When the user selects one of the brewing modules 133, such as the espresso, the control system 150 will switch to the corresponding brewing mode, that is, the espresso mode. Each brewing module 133 corresponds to a brewing mode with different brewing parameters. The brewing parameters may be pre-stored brewing recipes in the control system 150 or brewing recipes that the users input on-site based on their personal preferences.

The placement platform 140 is disposed on the base 120, and is located below the beverage preparation assembly 130. The first weighing system 170 is integrated at the bottom of the base 120. The cup body 200 is placed on the placement platform 140, and is located below the beverage preparation assembly 130. The second weighing system 180 is integrated at the bottom of the cup body 200. The first weighing system 170 and the second weighing system 180 may be an electronic scale or may be a combination of a weighing platform and a load sensor.

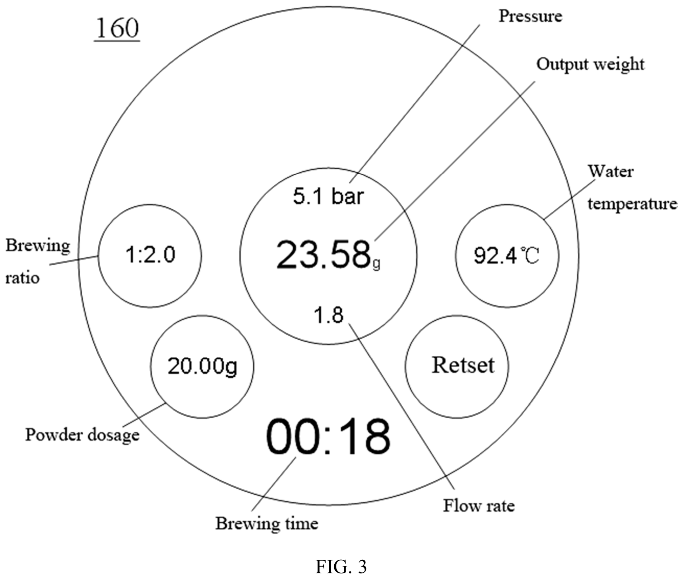

The display screen 160 is an interactive touch display screen 160, through which the user may select the brewing mode, preset and adjust the brewing parameters in real time, and store brewing recipes. As shown in FIG. 3, it is a possible layout of a user interface on the touch display screen 160 according to the first embodiment of the present invention. It should be noted that, FIG. 3 is merely an example, and does not intend to limit the layout of the user interface. Any layout of the user interface that is capable of achieving the objectives of the present invention shill fall within the protection scope of the present invention. For example, a circular pattern displaying the brewing ratio on the left side in FIG. 3 may be placed at the location of a circular pattern displaying the water temperature on the right side, and a reset pattern at the right lower of FIG. 3 may be placed at the location of a circular pattern displaying the powder dosage at the left lower of FIG. 3, and so on. The Users may freely design the layout of all UI elements on the touch display screen 160 according to their own requirements, preferences, and habits. The user interface on the touch display screen 160 is a comprehensive digital interface, from which the users may select the brewing modes, view current readings of the brewing parameters, and adjust the brewing parameters as required at any time. Additionally, the touch display screen160 may be provided with dynamic control components. The users may interact with the dynamic control components, for example, in a professional mode of the espresso mode, an interactive radar chart is provided for setting a pressure-time curve, while a free mode of the espresso mode supports user-controlled gradual water injection based on the touch interaction.

The control system 150 is communicatively connected to the beverage preparation assembly 130, the display screen 160, the first weighing system 170, and the second weighing system 180 separately. The first weighing system 170 is configured to measure input weights of water and powder in the beverage preparation assembly 130, before a brewing process, it serves to verify the water injection amount and the powder dosage, and in the brewing process, it serves to monitor the actual water delivery amount. The second weighing system 180 is configured to measure an output weight of beverage in the cup body 200, in the brewing process, it serves to measure an accumulated weight of the beverage in the cup body 200, and provide real-time feedback to ensure precise control of the final beverage output amount. The control system 150 is configured to adjust brewing parameters of the beverage preparation assembly 130 in real time according to input set values of the brewing parameters, and current readings of the input weight and the output weight, and display the current readings of the input weight, the output weight, and the brewing parameters in real time through the display screen 160. The brewing parameters include a powder dosage, a water injection volume, a brewing ratio, a brewing time, and a water temperature, a pressure and a flow rate of water flow passing through the powder.

According to the beverage machine provided by the embodiment of the present invention, the base 120 is disposed below the body 110, enabling to accurately measure a weight of the body 110, thereby precisely controlling the water injection volume, and thus ensuring more stable extraction process. In the brewing process, the remaining water volume in the body 110 is monitored at any time through the touch display screen display 160, so that the brewing parameters are adjusted when necessary, and thus the brewing effect is optimized. The amount of injected water is recorded through the first weighing system 170, the second weighing system 180 records the amount of the extracted coffee, and by combining the two measurements, the extraction process is comprehensively known, so that the extraction process is accurately tracked, and thus the process is ensured to be controllable. The control system 150 automatically adjusts the brewing process according to the data of the input weight of the first weighing system 170 and the output weight of the second weighing system 180 to ensure that an ideal ratio of the coffee powder to the water is achieved, so that the taste is more stable, and thus the intelligent optimization of the extraction process is realized.

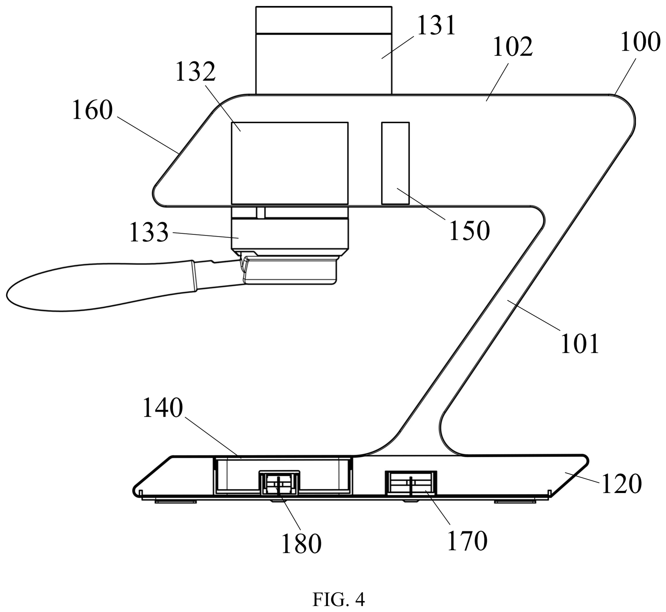

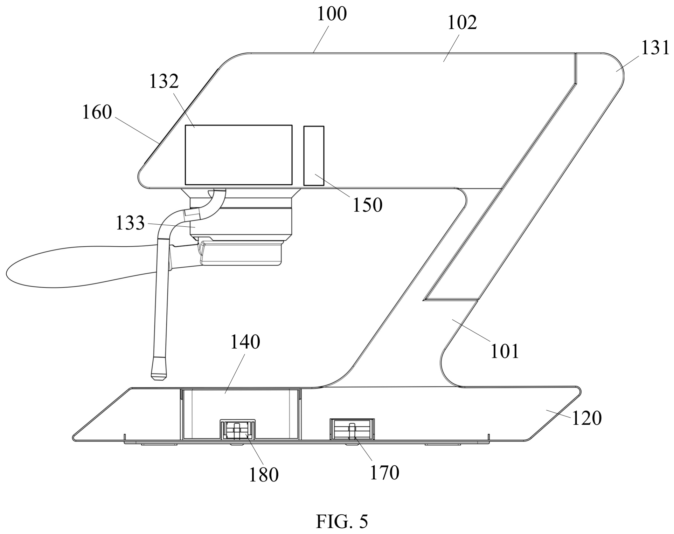

Referring to FIG. 4 and FIG. 5, an alternative embodiment of the present invention provides a beverage machine, except that a shape and dimension of the beverage machine is different from that of the beverage machine of the above embodiment, the other differences lie in that the main body 100 is an integrally formed structure, which has a base 120, a support frame 101 extending obliquely upward from the base 120, and a box body 102 extending from the top of the support frame 101 to above the base 120. A portion of the beverage preparation assembly 130 and the control system 150 are disposed in the box body 102. The placement platform 140 is provided on an upper surface of the base 120, the first weighing system 170 is disposed inside the base 120, and the second weighing system 180 is disposed in the placement platform 140. The brewing module 133 of the beverage preparation assembly 130 extends downwards out of the box body 102 from the brewing chamber 132, and is detachably connected to the box body 102 and located above the placement platform 140. As shown in FIG. 4, the water tank 131 of the beverage preparation assembly 130 is a cylindrical structure protruding from the top of the box body 102, which is convenient for the user to add water.

According to an alternative embodiment of the present invention, as shown in FIG. 5, the water tank 131 of the beverage preparation assembly 130 is a sloped structure located at the joint of the box body 102 and the support frame 101, this design makes the appearance of the beverage machine more aesthetically pleasing and improves the space utilization of the main body 100.

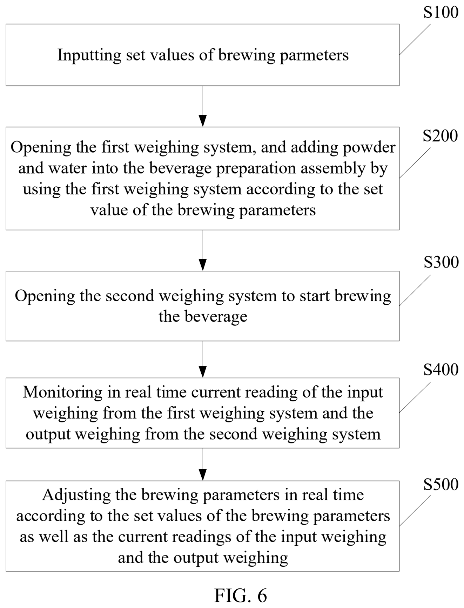

Referring to FIG. 6, embodiments of the present invention provide a beverage preparation method, applied to the beverage machines provided by the above embodiments of the present invention both execute a beverage preparation method including the following steps:
S100: inputting set values of brewing parameters.
S200: opening the first weighing system 170, and adding powder and water into the beverage preparation assembly according to the set values of the brewing parameters.
S300: opening the second weighing system 180 to start brewing the beverage.
S400: monitoring a current reading of the input weight from the first weighing system 170 and a current reading of the output weight from the second weighing system 180 in real time.
S500: adjusting the brewing parameters in real time according to the set values of the brewing parameters and the current readings of the input weight and the output weight.

The set values of the brewing parameters include set values of a brewing ratio and a powder dosage. The adding the powder and water into the beverage preparation assembly 130 according to the set values of the brewing parameters of step S200 include: calculating an injection volume of the water required to be input into the beverage preparation assembly 130 according to the input set values of the brewing ratio and the powder dosage.

Step S500 also includes: comparing current readings of the pressure and flow rate with their set values in real time, and when the pressure or flow rate deviates from the set values thereof, adjusting other brewing parameters (for example, adjusting a powder dosage, a water injection volume, a brewing ratio or a brewing time) in real time to achieve adjustment of the pressure or the flow rate, to ensure consistency for preparing the beverage under a current brewing mode.

The step S500 specifically includes: by comparing current readings of the input weight and the output weight with their set values in real time, determining whether the beverage currently output into the cup body 200 conforms to an expected brewing ratio, and adjusting the brewing parameters in real time when the beverage does not conform to the expected brewing ratio.

The step S500 also includes: by monitoring the water temperature in real time and adjusting he water temperature when the water temperature deviates from its set value, maintaining the water temperature within a range of a set value of the water temperature.

For ease of understanding, the present invention will be described below by taking a coffee brewing process as an example.

Specifically, after the user inputs the set values of the brewing parameters, the body 110 is connected to the base 120, and the cup body 200 is placed on the placement platform 140 of the base 120. The first weighing system 170 is activated to measure a total weight of the body 110 and the cup body 200, and then it is reset to zero. At this point, the display screen 160 shows the input weight to be 0.0 g. Next, the body 110 is removed from the base 120, and 20.0 g of coffee powder is input into a coffee basket of the brewing module 133 according to the set value of the powder dosage. The body 110 is then mounted on the base 120 again, and the weight of the coffee powder is confirmed on the touch display screen 160, and then it is reset to zero. In this way, the weight change of the coffee powder during a brewing process will be displayed on the touch display screen 160, and the zeroing function enables the user to more conveniently observe the actual amount of coffee extracted, so that during extraction, the first weighing system 170 only calculates the amount of water flowing into the cup body 200, and thereby ensuring accurate measurement. Subsequently, water is added to the water tank 131, and the first weighing system 170 records a weight of the water, for example, when the weight of the water is 100 g, stop adding the water. The second weighing system 180 is then activated and the brewing process is started. A variable speed pump is responsible for transporting the water from the water tank 131 to the brewing chamber 132. The control system 150 is equipped with a pressure sensor which provides real-time feedback to the control system 150, ensuring that the water pump operates according to the preset pressure curve, and thus maintaining the flow rate and pressure of the water are at the set values. The pressure curve is a curve showing how the water pressure varies with a flow rate, indicating a pressure that should be applied to the water at different flow rates. During the brewing process, as the liquid is extracted, the second weighing system 180 continuously measures the weight of the brewed liquid, so that the increase in the output weight of the beverage in the cup body 200 is monitored. This weight change corresponds to the volume of the outputted water, and it is recorded and monitored in real time. In this way, the remaining amount of the water in the water tank 131 is measured and tracked by the first weighing system 170, so that it may be compared with the extraction amount of coffee in the cup body 200, and thereby helping to analyze whether the extraction is sufficient. Finally, after a preset brewing time (for example, 30 seconds), the control system 150 stops the water flow, and the second weighing system 180 displays the final extraction amount through the touch display screen 160 (for example, displaying 60 g of brewed coffee liquid). The control system 150 calculates the extraction efficiency and displays it on the touch display screen 160 to ensure that the brewing process conforms to the correct brewing parameter requirements. In this embodiment, a structure that the body 110 separates from the base 120 is adopted. The setting of weight, the time, the flow rate, the pressure and the temperature of the water, and the brewing ratio are integrated in the control system 150, so that by using an interactive UI, the user can finely adjust the brewing process to achieve a perfect extraction effect. Through the data measured by the first weighing system 170 and the second weighing system 180 in real time, and combined with real-time pressure and flow rate feedback, thereby it is ensured that the control system 150 dynamically adjusts the brewing parameters, and thus precisely producing consistent high-quality coffee. The control system 150 can independently and accurately track the water injection volume and the extracted coffee amount, and thereby enabling to more precisely control the brewing process, and monitoring and optimizing extraction performance in real time. This method avoids the uncertainty that the water volume is determined by experience, so that the coffee extraction is more stable, and it is especially suitable for those who pursue a specific brewing ratio and extraction efficiency.

In addition to the powder dosage and water injection volume are manual input or selected by a user, before the brewing process, the control system 150 is also configured to calculate the water injection volume required to be input into the beverage preparation assembly 130 according to the input brewing ratio and powder dosage. For example, when the user sets the coffee powder dosage to be 20 g and the brewing ratio to be 1:2, the control system 150 will calculate that the required water injection volume is 40 g. After the brewing process is completed, the second weighing system will measure the output weight of coffee in the cup body 200 and compare it with the weight of the input the water to ensure that the brewing ratio conforms to the set value.

The user may set a brewing time of the entire extraction process to control the contact time between water and coffee powder. The control system 150 records the operating time to control the flow rate of the water according to the set brewing time. When the control system 150 is set to automatic control, the brewing time will affect the flow rate of the water, and the control system 150 adjusts the flow rate of the water to ensure that a correct amount of water is injected to the coffee puck within the set brewing time. The brewing time also affects the extraction efficiency, and it may be cross-referenced with water pressure/flow rate, according to the dynamically changing remaining time, the water pressure is adjusted in real time to control the flow rate of the water, thereby improving extraction efficiency, and thereby optimizing the extraction effect.

The user may set the water temperature (which generally ranges from 90°C to 96°C to obtain optimal extraction results). At this condition, the control system 150 is required to heat the water to the set temperature before the extraction process begins. Since the water temperature affects an extraction rate and a solubility of the coffee powder, the control system 150 should adjust the brewing parameters (such as brewing time, the pressure and flow rate of the water) according to the set water temperature. The touch display screen 160 displays the current water temperature to ensure the brewing process only begins after the water temperature reaching the user' set value. The water temperature will affect the extraction efficiency. If the water temperature is too high or too low, it may cause over-extraction or under-extraction. Maintaining proper water temperature will ensure uniform extraction effect of the coffee powder. During the brewing process, the control system 150 monitors the water temperature in real time to maintain the water temperature within the set range.

The user may manually set the pressure (generally 9 bars for espresso) and flow rate (for example, 2 g/s) of the water according to brewing requirements. The control system 150 controls the flow rate of the water during the brewing process according to the user' set value, and adjusts the water pressure passing through the coffee powder. During the brewing process, the control system 150 measures and displays the pressure and flow rate of the water in real time, and the real-time pressure is used for monitoring the pressure subjected by the coffee powder when the water passes through the coffee powder to ensure that the pressure of the water remains at the correct level (for example, 9 bars) throughout the extraction process. The real-time flow rate indicates the amount of water passing through the coffee powder per second. By comparing the current readings and the set values of the pressure and the flow rate in real time, the control system 150 ensures the consistency for preparing the beverage in the current brewing mode by adjusting other brewing parameters (such as the flow rate or the brewing time) in real time when the pressure or the flow rate of the water deviates from the set value, and thus maintaining an optimal extraction state. By monitoring the data of the pressure and flow rate of the water in real time, the extraction process is optimized to ensure that the water uniformly contacts with the coffee powder, and thus a stable extraction effect is ensured. The setting of the pressure and flow rate of the water is critical for controlling the contact mode of the water and the coffee powder, which will directly affect the infiltration speed and uniformity of the coffee powder and the final extraction yield. The real-time feedback of the pressure and flow rate of the water ensures that the brewing process remains at an optimal operating state to provide consistent extraction effect. Furthermore, in some brewing modes, the users may also set values of the pressure and flow rate of the water in segments. For example, in an advanced (Pro) espresso mode, the extraction process is divided into four phases: pre-wetting (gentle saturation), pre-infusion (gradually increasing the pressure and temperature of the water to expand the coffee powder and excite the aroma of the coffee powder), extraction (full-pressure extraction), and pressure decline (the pressure is controlled gradual reduction). Through the user interface of the touch display screen 160 (for example, an interactive radar chart), the users may interactively set the pressure of the water and the brewing time for each stage, enabling the users to customize detailed pressure curves. For example, the users trace with their fingers on the touch display screen 160 to draw the pressure/flow rate curve, or click and drag points on the curve to dynamically adjust the pressure and flow rate. The touch display screen 160 displays the curve adjusted in real time, including the pressure and flow rate curves. In a free-style espresso mode, a manual override function allows the pressure curve to be freely adjusted, so that a professional user is able to fine-tune the extraction process in real time. Therefore, the unprecedented extraction control capability is provided, so that the user is able to perform fine adjustment for different coffee beans and brewing styles to realize a highly personalized customization experience.

The user may select a brewing ratio (for example, 1:1, 1:2 or 1:2.5) to control the amount of water used per unit of coffee powder. The control system 150 automatically adjusts the amount of water according to the selected brewing ratio to match the dosage of coffee powder. The control system 150 monitors the weight of the water through the first weighing system and the final output weight of coffee through the second weighing system 180 to ensure that the correct amount of water is used to achieve the desired ratio. The control system 150 compares the set brewing ratio with the actual water injection volume (tracked by the second weighing system 180) to ensure that the output coffee amount meets expectation value, and taking into account the water retention of coffee powder (the water absorbed by the coffee powder). By controlling the ratio of the water to the coffee powder, the control system 150 ensures that ideal concentration and flavor extraction is achieved. If the second weighing system detects that the output weight does not match the expectation value, the control system 150 may adjust the brewing process, or feedback to the users to prompt them to modify the setting.

According to the present invention, the control system 150 tracks the input weight of the water and the output weight of the beverage through the cooperative work of the first weighing system and the second weighing system, and the full system weighing calibration enables real-time quality balance to be achieved. The control system 150 does not depend on a traditional flowmeter or a timer, but uses real-time weight feedback to control a water pump to inject water into the water tank 131, so that the flow rate and the pressure of the water and the brewing time are automatically adjusted, thereby optimizing the extraction effect, and meanwhile, avoiding inaccuracy caused by drift of the flowmeter or timing error, achieving accurate volume delivery, and thus ensuring stability and repeatability of each brewing process. The control system 150 is able to monitor the pressure and flow rate of the water in real time, and combined with the weight tracking of the first weighing system and the second weighing system, then continuous feedback is provided, so that the control system 150 is able to adjust the parameters in real time to optimize the extraction process, and thus ensuring that the final prepared coffee reaches the standard set by the user. In addition, the control system 150 may store a complete brewing recipe (including the brewing parameters such as the coffee dosage, water volume, pressure curve of the water, time and water temperature), and "learn" from each extraction process by using the real-time weight feedback mechanism from the dual weighing systems to automatically adjust future brewing parameters to optimize extraction stability. Over time, the control system 150 is able to adjust the input water volume to compensate for the stable water retention in the coffee puck, thereby improving the consistency of the extraction process. The users may also save, load, edit, and share recipe through a cloud-based recipe library.

Specifically, during the brewing process, the control system 150 compares the current reading of the input weight measured by the first weighing system 170 and the current reading of output weight measured by the second weighing system with their set values in real time respectively to determines whether the beverage currently output into the cup body 200 conforms to an expected brewing ratio, and adjusts the brewing parameters in real time when the beverage does not conforms to the expected brewing ratio. During the brewing process, the control system 150 continuously monitors the reading of the output weight, and automatically stops the water pump when a target beverage output volume is reached. That is, the control system 150 cross-compare the current readings of the input weight and output weight in real time, for example, if the weight of the water measured by the first weighing system is reduced by 40 g, and the weight of the coffee measured by the second weighing system merely increases 36 g, then the control system 150 infers that 4 g of the water is absorbed by the coffee puck, and then, the value of 4g is used as feedback to optimize future brewing parameters to improve consistency of the brewing process.

In another embodiment of the first embodiment of the present invention, the first weighing system 170 is integrated in the beverage preparation assembly 130.

In another embodiment of the first embodiment of the present invention, the second weighing system 180 is integrated in the placement platform 140.

In another embodiment of the first embodiment of the present invention, the cup body 200 is fixed to the placement platform 140 by means of magnetic attraction.

According to the beverage machine provided by the above embodiments of the present invention, the input weight of the water and the output weight of the beverage are monitored in real time. By adopting continuous weight feedback, the accurately control of the water volume delivery is achieved. Meanwhile, by providing an interactive adaptive user interface, operators are able to dynamically adjust a pressure-time curve and the brewing parameters. Moreover, a plurality of brewing modes (for example, including a standard, professional and free mode for espresso, a capsule brewing mode, and a filter/tea steeping mode) is provided. In addition, different brewing modes can share the same weighing and sensor measurement principle to enable the mode to be switched in the same control system 150. When the user selects different modes, the user interface on the touch display screen 160 will be automatically adjusted, and merely the control options and the preset parameters related to this mode are displayed to ensure a concise and intuitive operation experience. Moreover, a single apparatus is compatible with a plurality of brewing modes, including: an espresso mode (for example, a standard mode, a professional mode or a free mode), a capsule mode, a filter coffee mode (for example, a guided multi-pour mode, or a manual pour-over mode), and a tea steeping mode. The control system 150 adopts a unified weight feedback control strategy and a user interface of the interactive touch display screen 160 is provided, so that precise management of the brewing parameter is ensured no matter which brewing mode is selected, thereby providing a multifunctional brewing platform which may replace a plurality of independent apparatuses, and thus reducing costs and saving space, and meanwhile, high quality and consistency in different brewing modes is ensured.

According to the beverage machine and beverage preparation method disclosed in the present invention, two weighing systems are provided to simultaneously monitor the input weight of the water and the output weight of the beverage, then it is ensured that the brewing ratio is accurately controlled and the water retention of the powder puck is considered, so that real-time accurate feedback is provided, and thus the consistency of the extraction quality is maintained. By precisely regulating water flow rate and valve operation through the powder cake Based on the direct measurements of the input weight and output weight, the flow rate and on/off of the water passing through the coffee powder are accurately controlled, so that precise volumetric delivery is achieved, and thereby ensuring stability, consistency and repeatability of each brewing process. Moreover, the users can store and share personalized recipes, and the users can perform fine adjustment on different coffee beans and brewing styles to realize a highly personalized customization experience. Furthermore, the system can gradually optimize the brewing parameters, and thus a more accurate brewing experience is achieved. In addition, a multifunctional brewing platform is provided, which may replace a plurality of standalone apparatuses, thereby reducing costs and saving space, and at the same time, ensuring high quality and consistency in different brewing modes.

It should be understood that, the description of specific embodiments of the present invention hereinabove is provided merely for illustrating the technical rote and characteristics of the invention, with the purpose of enabling those skilled in the art to understand the content of the present invention and implement the invention, but the present invention is not limited to the specific embodiments described above. Any variations or modifications made within the scope of the claims of the present invention shall fall within the protection scope of the present invention.

## Claims

1. A beverage machine comprising: a main body (100) and a cup body (200), wherein
the main body (100) is provided with a beverage preparation assembly (130), a placement platform (140), a control system (150), a display screen (160), a first weighing system (170), and a second weighing system (180);
the cup body (200) is disposed on the placement platform (140) and located below the beverage preparation assembly (130);
the first weighing system (170) is configured to measure an input weight of water and powder in the beverage preparation assembly (130);
the second weighing system (180) is configured to measure an output weight of a beverage in the cup body (200); and
the control system (150) is communicatively connected to the beverage preparation assembly (130), the display screen (160), the first weighing system (170) and the second weighing system (180) separately, and is configured to adjust brewing parameters of the beverage preparation assembly (130) in real time according to input set values of the brewing parameters and current readings of the input weight and the output weight, and display the current readings of the input weight, the output weight, and current readings of the brewing parameters in real time through the display screen (160).

2. The beverage machine according to claim 1, wherein the brewing parameters comprises a powder dosage, a water injection volume, a brewing ratio, a brewing time, and a water temperature, a pressure and a flow rate of water flow passing through the powder; during a brewing process, the control system (150) compares current readings of the pressure and the flow rate with the set values of the pressure and the flow rate respectively in real time, and when the pressure or the flow rate deviates from the set value of the pressure or the flow rate, adjusts other brewing parameters in real time to achieve adjustment of the pressure or the flow rate, to ensure consistency for preparing the beverage under a current brewing mode.

3. The beverage machine according to claim 2 or claim 3, wherein during the brewing process, the control system (150) compares a current reading of the input weight measured by the first weighing system (170) in real time and a current reading of the output weight measured by the second weighing system (180) in real time with set values respectively to determine whether the beverage currently outputted into the cup body conforms to an expected brewing ratio, and adjusts the brewing parameters in real time when the beverage does not conforms to the expected brewing ratio.

4. The beverage machine according to claim 2 or claim 3, wherein during the brewing process, the control system (150) monitors the water temperature in real time to maintain the water temperature within a range of a set value of the water temperature.

5. The beverage machine according to any one of claims 2 to 4, wherein before brewing process starts, the control system (150) calculates an injection volume of the water required to be input into the beverage preparation assembly (130) according to the input set values of the brewing ratio and the powder dosage.

6. The beverage machine according to any one of claims 1 to 5, wherein the display screen (160) is an interactive touch display screen, and a user selects a brewing mode, presets and adjusts the brewing parameters in real time, and stores brewing recipes through the interactive touch display screen.

7. The beverage machine according to any one of claims 1 to 6, wherein the beverage preparation assembly (130) comprises a water tank (131), a brewing chamber (132), and a brewing module (133), the water tank (131) and the brewing chamber (132) are disposed in the main body (100), and the brewing module is detachably connected to the brewing chamber (132).

8. The beverage machine according to any one of claims 1 to 7, wherein the main body (100) comprises a body (110) and a base (120), the body (110) is detachably connected to the base (120), a portion of the beverage preparation assembly (130) and the control system (150) are disposed in the body (110), the placement platform (140) is disposed on the base (120) and located below the beverage preparation assembly (130), and the first weighing system (170) is integrated at a bottom of the base (120).

9. The beverage machine according to any one of claims 1 to 7, wherein the first weighing system (170) is integrated in the beverage preparation assembly (130); and/or
the second weighing system (180) is integrated at a bottom of the cup body (200) or in the placement platform (140).

10. The beverage machine according to any one of claims 1 to 9, wherein the cup body (200) is fixed to the placement platform (140) in a magnetic attraction manner.

11. A beverage preparation method, wherein the beverage preparation method is implemented by the beverage machine according to any one of claims 1 to 10, and the beverage preparation method comprise the following steps:
S100: inputting the set values of the brewing parameters;
S200: opening the first weighing system (170), and adding the powder and water into the beverage preparation assembly (130) according to the set values of the brewing parameters;
S300: opening the second weighing system (180) to start brewing the beverage;
S400: monitoring the current reading of the input weight from the first weighing system (170) and the current reading of the output weight from the second weight system (180) in real time; and
S500: adjusting the brewing parameters in real time according to the set values of the brewing parameters and the current readings of the input weight and the output weight.

12. The beverage preparation method according to claim 11, wherein the brewing parameters comprises a powder dosage, a water injection volume, a brewing ratio, a brewing time, and a water temperature, pressure, and flow rate of water flow passing through the powder; and step S500 comprises: comparing current readings of the pressure and flow rate with set values of the pressure and the flow rate respectively in real time, and when the pressure or flow rate deviates from the set values of the pressure and the flow rate, adjusting other brewing parameters in real time to achieve adjustment of the pressure or the flow rate, to ensure consistency for preparing the beverage under a current brewing mode.

13. The beverage preparation method according to claim 12, wherein the step S500 further comprises: maintaining, by monitoring the water temperature in real time, the water temperature within a range of a set value of the water temperature.

14. The beverage preparation method according to any one of claims 11 to 13, wherein step S500 comprises: determining, by comparing current readings of the input weight and the output weight with set values in real time to monitor whether the beverage currently output into the cup body conforms to an expected brewing ratio, and adjusting the brewing parameters in real time when the beverage does not conform to the expected brewing ratio.

15. The beverage preparation method according to any one of claims 11 to 14, wherein the set values of the brewing parameters comprise set values of a brewing ratio and a powder dosage, the adding the powder and water into the beverage preparation assembly (130) according to the set values of the brewing parameters of step S200 comprises: calculating, according to the input set values of the brewing ratio and the powder dosage, an injection volume of the water required to be input into the beverage preparation assembly (130).
